# EUROPÄISCHE PATENTANMELDUNG

(11) **EP 1 860 297 A2**
(43) Veröffentlichungstag der Anmeldung: **28.11.2007**
(21) Anmeldenummer: 07007933.0
(22) Anmeldetag: 19.04.2007
(51) Int. Cl.: F01P 7/10, B60K 11/08

(54) **Kühlsystem**

(30) Priorität: 23.05.2006 DE 102006024522
(71) Anmelder: Behr GmbH & Co. KG, 70469 Stuttgart (DE)
(72) Erfinder: Bielesch, Thomas, 75417 Mühlacker (DE)

(57) **Zusammenfassung**

Die Erfindung betrifft ein Kühlsystem, insbesondere für ein Kraftfahrzeug, mit einem Kühler, der von einer Kühlluftströmung durchströmt wird, die durch eine Einrichtung zum Steuern der Kühlluftströmung veränderbar ist, die mindestens eine Jalousie umfasst, die mit Hilfe eines Aktuators (11) verstellt wird, der von einer Ansteuereinrichtung angesteuert wird.

Um die Betriebssicherheit des Kühlsystems zu erhöhen, umfasst die Ansteuereinrichtung für den Aktuator (11) zwei Ansteuereinheiten (21,22), die parallel geschaltet sind.

## Beschreibung

Die Erfindung betrifft ein Kühlsystem, insbesondere für ein Kraftfahrzeug, mit einem Kühler, der von einer Kühlluftströmung durchströmt wird, die durch eine Einrichtung zum Steuern der Kühlluftströmung veränderbar ist, die mindestens eine Jalousie umfasst, die mit Hilfe eines Aktuators verstellt wird, der von einer Ansteuereinrichtung angesteuert wird.

Aufgabe der Erfindung ist es, die Betriebssicherheit eines Kühlsystems gemäß dem Oberbegriff des Anspruchs 1 zu erhöhen.

Die Aufgabe ist bei einem Kühlsystem, insbesondere für ein Kraftfahrzeug, mit einem Kühler, der von einer Kühlluftströmung durchströmt wird, die durch eine Einrichtung zum Steuern der Kühlluftströmung veränderbar ist, die mindestens eine Jalousie umfasst, die mit Hilfe eines Aktuators verstellt wird, der von einer Ansteuereinrichtung angesteuert wird, dadurch gelöst, dass die Ansteuereinrichtung für den Aktuator zwei Ansteuereinheiten umfasst, die parallel geschaltet sind. Das liefert den Vorteil, dass der Aktuator über beide Ansteuereinheiten bestromt werden kann. Dadurch ist es möglich, dass der Aktuator durch eine der Ansteuereinheiten angesteuert, insbesondere bestromt, und durch die andere Ansteuereinheit überwacht wird, und umgekehrt. So kann bei einem Ausfall der einen Ansteuereinheit die andere Ansteuereinheit den Fehler an eine übergeordnete Steuereinheit melden und selbst die Steuerung des Aktuators übernehmen.

Ein bevorzugtes Ausführungsbeispiel des Kühlsystems ist dadurch gekennzeichnet, dass die Ansteuereinheiten jeweils ein Endstufen IC (Integrated Circuit, intergrierter Schaltkreis) mit einem Ausgang umfassen, wobei die Ausgänge der Endstufen ICs parallel geschaltet sind. Die Ansteuereinheiten umfassen vorzugsweise jeweils einen Mikroprozessor und ein Endstufen IC (Integrated Circuit, integrierter Schaltkreis). Vorzugsweise ist das Endstufen IC mit einer Statusleitung ausgestattet, die dazu dient, den Zustand des Ausgangs des Endstufen ICs zum Aktuator hin zu überprüfen. Dadurch kann detektiert werden, ob ein Leitungsbruch oder Kurzschluss in der zugehörigen Leitung vorliegt.

Ein weiteres bevorzugtes Ausführungsbeispiel des Kühlsystems ist dadurch gekennzeichnet, dass zwischen den Aktuator und die Endstufen ICs jeweils eine Diode geschaltet ist. Die Dioden dienen als Entkopplungsglieder.

Ein weiteres bevorzugtes Ausführungsbeispiel des Kühlsystems ist dadurch gekennzeichnet, dass die Ausgänge der Endstufen ICs über jeweils eine Zusatzschaltung mit einer übergeordneten Steuereinheit verbunden sind. Die Zusatzschaltung dient dazu, die Spannung am Aktuator zu ermitteln. Die ermittelte Spannung wird durch die übergeordnete Steuereinheit ausgewertet.

Ein weiteres bevorzugtes Ausführungsbeispiel des Kühlsystems ist dadurch gekennzeichnet, dass die Zusatzschaltung zwei Widerstände umfasst, die als Spannungsteiler dienen. Die beiden Widerstände sind vorzugsweise in Reihe geschaltet.

Ein weiteres bevorzugtes Ausführungsbeispiel des Kühlsystems ist dadurch gekennzeichnet, dass die Zusatzschaltung einen Filterfcondensator umfasst-Der Filterfcondensator dient dazu, die Aktuatorspannung zur weiteren Verarbeitung aufzubereiten. Vorzugsweise ist der Filterkondensator zu einem der Widerstände parallel geschaltet.

Ein weiteres bevorzugtes Ausführungsbeispiel des KÜhlsystems ist dadurch gekennzeichnet, dass die Zusatzschaltung einen weiteren Widerstand umfasst, der zur Entkopplung dient.

Ein weiteres bevorzugtes Ausführungsbeispiel des Kühlsystems ist dadurch gekennzeichnet, dass die Ansteuereinheiten jeweils in einen Lüftermotor integriert sind.

Ein weiteres bevorzugtes Ausführungsbeispiel des Kühlsystems ist dadurch gekennzeichnet, dass der Aktuator einen Elektromagneten oder ein elektrisch angesteuertes Ventil, insbesondere ein Pneumatik- oder Hydraulikventil, umfasst.

Ein weiteres bevorzugtes Ausführungsbeispiel des Kühlsystems ist dadurch gekennzeichnet, dass die Einrichtung zum Steuern der Kühlluftströmung zwei Jalousien umfasst. Die beiden Jalousien werden gemäß einem wesentlichen Aspekt der Erfindung durch ein und denselben Aktuator betätigt.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: ein schematisches Schaltbild zur Ansteuerung eines Aktuators mit einer Ansteuereinheit;
- Figur 2: ein schematisches Schaltbild zur Ansteuerung eines Aktuators mit zwei Ansteuereinheiten;
- Figur 3: ein schematisches Schaltbild zur Ansteuerung eines Aktuators mit einer Ansteuereinheit und einer Zusatzschaltung und
- Figur 4: ein schematisches Schaltbild zur Ansteuerung eines Aktuators mit zwei Steuereinheiten und zwei Zusatzschaltungen.

Das im Folgenden beschriebene Kühlsystem ist allgemein für Fahrzeuge, zum Beispiel Personenkraftwagen, Lastkraftwagen, Omnibusse und dergleichen, einsetzbar, die als Antriebsaggregat beispielsweise eine Brennkraftmaschine aufweisen. Das Kühlsystem ist ohne weiteres auch für Elektrofahrzeuge oder Hybridfahrzeuge geeignet.

Das Kühlsystem ist zum Beispiel an einem Frontende eines Kraftfahrzeugs in einem Motorraum angeordnet. Dabei ist das Kühlsystem zwischen dem Motorraum und dem Frontende des Fahrzeugs angeordnet. Am Frontende des Fahrzeugs ist mindestens eine Lufteintrittsöffnung vorgesehen, durch die dem Kühlsystem ein Luftstrom zugeführt wird. Der Luftstrom, der auch als Kühlluftstrom oder Kühlluftströmung bezeichnet wird, gelangt durch die Lufteintrittsöffnung zu einer Wärmetauschereinrichtung, die zwischen dem Frontende des Kraftfahrzeugs und einem Motor angeordnet ist. Zwischen dem Motor und dem Wärmetauscher ist ein Lüfter angeordnet. Der Wärmetauscher, der auch als Kühler bezeichnet wird, wird von Kühlmittel durchflossen und von dem Luftstrom durchströmt.

In einer weiteren Luftdurchtrittsöffnung ist mindestens eine Kühlluftjalousie angeordnet, die mit Hilfe eines Aktuators verstellbar und/oder verschließbar ist. Die Kühlluftjalousie kann auch durch Staudruckklappen ersetzt werden. Der Begriff Kühlluftjalousie oder kurz Jalousie steht im Rahmen der vorliegenden Erfindung für irgendeine Einrichtung zum Steuern der Kühlluftströmung.

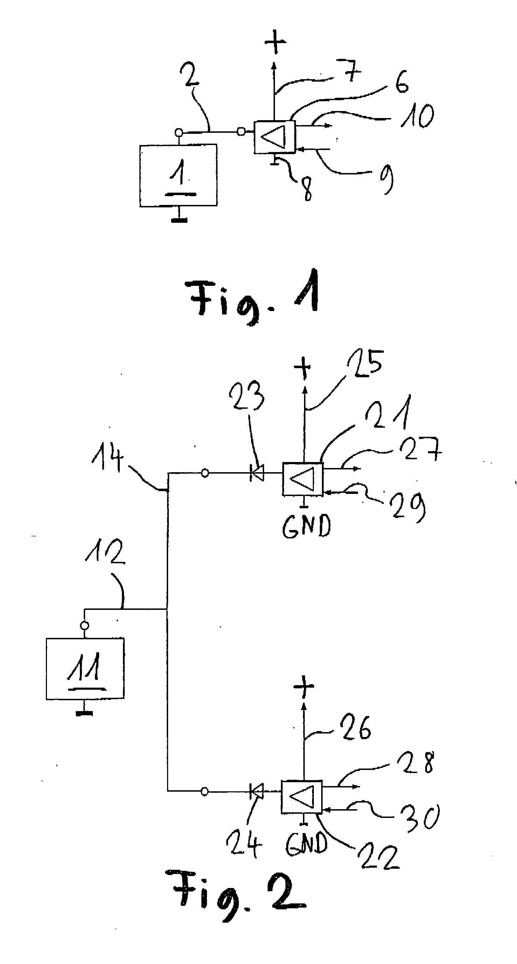

Einfache Aktuatoren, wie Elektromagnete und elektrisch angesteuerte Pneumatik- oder Hydraulikventile, können mit einem in der Ansteuereinheit integrierten Endstufen IC (Integrated Circuit, intergrierter Schaltkreis) betrieben werden. In Figur 1 ist ein Aktuator einer Kühlluftjalousie, die auch als Jalousie bezeichnet wird, mit 1 bezeichnet. Der Aktuator 1 ist durch eine Leitung 2 an eine Ansteuereinheit 6 angeschlossen. Die Ansteuereinheit 6 ist, wie durch einen Pfeil 7 und eine Leitung 8 angedeutet ist, am Pluspol einer Spannungsquelle, zum Beispiel eine Batterie eines Kraftfahrzeugs, angeschlossen- GND bedeutet ground, das heißt der negative Anschluss der Spannungsquelle. In die Ansteuereinheit 6 ist ein Endstufen IC integriert, der von einer ebenfalls in die Ansteuereinheit 6 integrierten Elektronik, zum Beispiel einem Mikroprozessor, angesteuert wird. Durch einen Pfeil 9 ist die Ansteuerung des Endstufen ICs angedeutet. Durch einen Pfeil 10 ist eine Statusleitung angedeutet, durch die der Zustand des Ausgangs des Endstufen ICs zum Aktuator hin übermittelt wird. Damit kann detektiert werden, ob ein Leitungsbruch oder ein Kurzschluss in der Leitung 2 vorliegt, Bei einem Ausfall der Ansteuereinheit 10 kann die durch den Aktuator 1 betätigte Kühlluftjalousie nicht mehr aktiviert werden.

Gemäß einem wesentlichen Aspekt der vorliegenden Erfindung wird die Bestromung eines Aktuators durch zwei Ansteuereinheiten ermöglicht. Durch eine Nutzung der Möglichkeit einer gleichzeitigen Aktuatorsteuerung durch Verwendung von zwei Ansteuereinheiten kann die Sicherheit des Kühlsystems erhöht werden. Durch Verwendung eines einzigen Aktuators zur Ansteuerung von zwei Kühlluftjalousien können bei gleichzeitiger Erhöhung der Redundanz durch die Ansteuermöglichkeit durch die zweite Ansteuereinheit Kosten reduziert werden, da ein ansonsten benötigter zweiter Aktuator entfallen kann.

In Figur 2 ist ein Aktuator 11 angedeutet, der durch Leitungen 12 und 14 sowohl mit einer ersten Ansteuereinheit 21 als auch mit einer zweiten Ansteuereinheit 22 verbunden ist. Die beiden Ansteuereinheiten 21 und 22 sind parallel geschaltet und dienen zur Ansteuerung des Aktuators 11. Gemäß einem wesentlichen Aspekt der Erfindung wird der Aktuator 11 über die beiden Ansteuereinheiten 21, 22 angesteuert. Die beiden Ansteuereinheiten 21, 22 enthalten jeweils einen Endstufen IC. Die Ausgänge der beiden Endstufen ICs sind parallel geschaltet. Zwischen den Aktuator 11 und die Ansteuereinheiten 21 und 22 ist jeweils eine Diode 23, 24 geschaltet. Die Dioden 23, 24 dienen, vereinfacht dargestellt, als Entkopplungsglieder. Jede der beiden Ansteuereinheiten 21, 22 kann den Aktuator 11 bestromen. Durch Pfeile 25 und 26 ist angedeutet, dass die Ansteuereinheiten 21 und 22 an eine Stromquelle, insbesondere die Batterie eines Kraftfahrzeugs, angeschlossen sind. Durch Pfeile 27 und 28 ist angedeutet, dass Informationen über den Status der Leitung 14 an eine vorgeschaltete, weitere Steuereinheit weitergeleitet werden. Durch Pfeile 29 und 30 ist die Ansteuerung von in die Steuereinheiten 21 und 22 integrierten Endstufen ICs angedeutet.
Zu einer gegenseitigen Überwachung der Ansteuerfunktion der beiden Ansteuereinheiten 21 und 22 ist es erforderlich, dass die Spannung am Aktuator 11 ermittelt und ausgewertet werden kann. Dies geschieht gemäß einem weiteren Aspekt der Erfindung durch eine Zusatzschaltung.

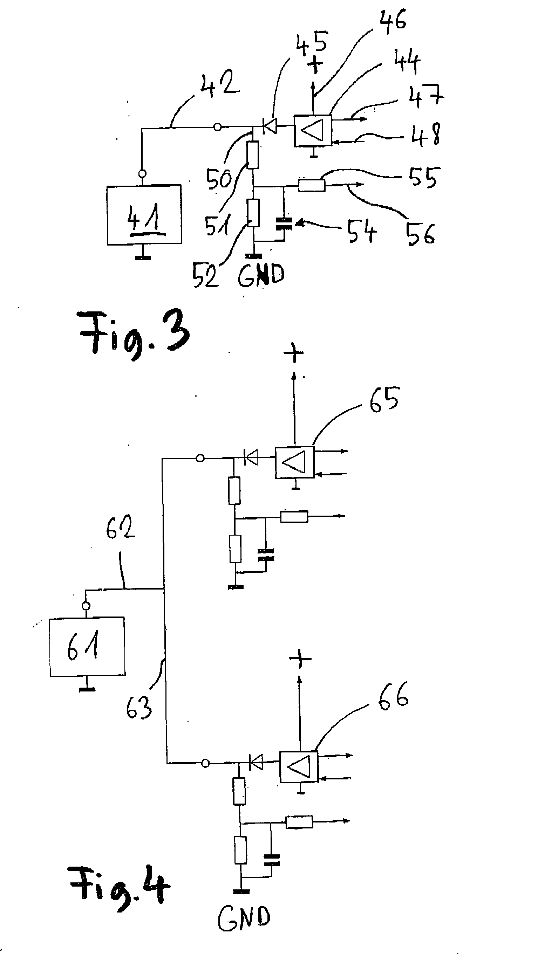

In Figur 3 ist ein Aktuator 41 angedeutet, der durch eine Leitung 42 an eine Ansteuereinheit 44 angeschlossen ist. Zwischen den Aktuator 41 und die Ansteuereinheit 44 ist eine Diode 45 geschattet. Durch einen Pfeil 46 ist angedeutet, dass die Ansteuereinheit 44 an eine Spannungsquelle angeschlossen ist. Durch einen Pfeil 47 ist angedeutet, dass der Status des Ausgangs einer in die Ansteuereinheit 44 integrierten Endstufe überwacht wird. Durch einen Pfeil 48 ist die Ansteuerung der Endstufe angedeutet. Durch eine Zusatzeinrichtung wird eine aufbereitete Aktuatorspannung, die durch einen Pfeil 56 angedeutet ist, an eine (nicht dargestellte) übergeordnete Steuereinheit weitergeleitet. Die Zusatzschaltung umfasst in einer Leitung 50, die zwischen dem Aktuator 41 und der Diode 45 von der Leitung 42 abzeigt, zwei in Reihe geschaltete Widerstände 51 und 52, die als Spannungsteiler dienen. Ein Filterkondesetor 54 ist parallel zu dem Widerstand 52 geschaltet. Ein weiterer Widerstand 55, der den vorgenannten Elementen 51, 52, 54 nachgeschaltet ist, dient zur Entkopplung.

In Figur 4 ist eine vollständige Prinzipschaltung dargestellt, die einen Aktuator 61 umfasst, der über Leitungen 62 und 63 an zwei Ansteuereinheiten 65 und 66 angeschlossen ist. Die beiden Ansteuereinheiten 65 und 66 sind jeweils genauso geschaltet, wie die Ansteuereinheit 44 in Figur 3. Aus Gründen der Übersichtlichkeit sind die Bezugszeichen der Dioden und der Zusatzschaltung in Figur 4 nicht dargestellt. Durch die Parallelschaltung der Ansteuereinheiten 65 und 66 ist es möglich, dass beispielsweise die Ansteuereinheit 65 den Aktuator 61 ansteuert und von der Ansteuereinheit 66 durch Ermittlung der Spannung des Aktuators 61 überwacht wird. Im umgekehrten Fall kann die Ansteuereinheit 66 durch die Ansteuereinheit 65 überwacht werden. Im erstgenannten Fall kann bei einem Ausfall der Ansteuereinheit 65 die Ansteuereinheit 66 den Fehlerfall an eine übergeordnete Steuereinheit melden und selbst die Steuerung des Aktuators 61 übernehmen. Durch die gleichzeitige Ansteuerung des Aktuators 61 durch beide Ansteuereinheiten 65 und 66 ist prinzipiell gewährleistet, dass der Aktuator 61 bestromt wird. Ansonsten würde ein Doppelfehler vorliegen. Dadurch ist eine erhöhte Redundanz gegeben. Außerdem ist der Verkabelungsaufinrand gering. Die beiden Ansteuereinheiten 65 und 66 mit oder ohne Zusatzschaltung sind als Gleichteile ausgebildet. Dadurch können die Systemkosten reduziert werden.

## Patentansprüche

1. Kühlsystem, insbesondere für ein Kraftfahrzeug, mit einem Kühler, der von einer Kühlluftströmung durchströmt wird, die durch eine Einrichtung zum Steuern der Kühlluftströmung veränderbar ist, die mindestens eine Jalousie umfasst, die mit Hilfe eines Aktuators (1;11;41;61) verstellt wird, der von einer Ansteuereinrichtung angesteuert wird, **dadurch gekennzeichnet, dass** die Ansteuereinrichtung für den Aktuator (11;41;61) zwei Ansteuereinheiten (21,22;44;65,66) umfasst, die parallel geschaltet sind.

2. Kühlsystem nach Anspruch 1, **dadurch gekennzeichnet, dass** die Ansteuereinheiten (21,22;44;65,66) jeweils ein Endstufen IC (Integrated Circuit, integrierter Schaltkreis) mit einem Ausgang umfassen, wobei die Ausgänge der Endstufen ICs parallel geschaltet sind.

3. Kühlsystem nach Anspruch 2, **dadurch gekennzeichnet, dass** zwischen den Aktuator (11;41;61) und die Endstufen ICs jeweils eine Diode (23,24;45) geschaltet ist.

4. Kühlsystem nach Anspruch 2 oder 3, **dadurch gekennzeichnet, dass** die Ausgänge der Endstufen ICs über jeweils eine Zusatzschaltung mit einer übergeordneten Steuereinheit verbunden sind.

5. Kühlsystem nach Anspruch 4, **dadurch gekennzeichnet, dass** die Zusatzschaltung zwei Widerstände (51,52) umfasst, die als Spannungsteiler dienen.

6. Kühlsystem nach Anspruch 4 oder 5, **dadurch gekennzeichnet, dass** die Zusatzschaltung einen Filterkondensator (54) umfasst.

7. Kühlsystem nach einem der Ansprüche 4 bis 6, **dadurch gekennzeichnet, dass** die Zusatzschaltung einen weiteren Widerstand (55) umfasst, der zur Entkopplung dient.

8. Kühlsystem nach einem der vorhergehenden Ansprüche, **dadurch gekennzeichnet, dass** die Ansteuereinheiten (21,22;44;65,66) jeweils in einen Lüftermotor integriert sind.

9. Kühlsystem nach einem der vorhergehenden Ansprüche, **dadurch gekennzeichnet, dass** der Aktuator (11;41;61) einen Elektromagneten oder ein elektrisch angesteuertes Ventil, insbesondere ein Pneumatik- oder Hydraulikventil, umfasst.

10. Kühlsystem nach einem der vorhergehenden Ansprüche, **dadurch gekennzeichnet, dass** die Einrichtung zum Steuern der Kühlluftströmung zwei Jalousien umfasst.
